# EUROPÄISCHE PATENTSCHRIFT

(11) **EP 3 695 895 B1**
(45) Veröffentlichungstag und Bekanntmachung des Hinweises auf die Patenterteilung: **22.12.2021**
(21) Anmeldenummer: 19157098.5
(22) Anmeldetag: 14.02.2019
(51) Int. Cl.: B01D 53/04, B01D 46/24

(54) **FILTERELEMENT MIT WABENKÖRPER ZUR LUFTREINIGUNG**
FILTER ELEMENT WITH HONEYCOMB STRUCTURE FOR AIR PURIFICATION
ÉLÉMENT FILTRANT POURVU DE CORPS EN NID D'ABEILLES DESTINÉ À L'ÉPURATION D'AIR

(43) Veröffentlichungstag der Anmeldung: 19.08.2020
(73) Patentinhaber: Carl Freudenberg KG, 69469 Weinheim (DE)
(72) Erfinder: Kuehl, Edith, 64289 Darmstadt (DE); Engelke, René, Dr., 69115 Heidelberg (DE); CAESAR, Thomas, Dr., 69469 Weinheim (DE)

(56) Entgegenhaltungen:
- EP-A2- 0 393 729
- EP-B1- 0 393 729
- DE-B4- 10 104 882
- JP-A- 2012 031 738
- US-A- 5 207 807
- US-A- 5 449 541
- US-A1- 2002 103 081

## Beschreibung

### Technisches Gebiet

Die Erfindung betrifft ein Filterelement nach dem Oberbegriff des Anspruchs 1 und einen Filter mit einem solchen Filterelement gemäß Anspruch 9.

### Stand der Technik

Aus der WO 2010/049 052 A1 ist ein Filterelement bekannt, welches als sogenannter Kombifilter ausgestaltet ist. Ein solches Filterelement filtert Partikel und adsorbiert Gase. Filterelemente dieser Art können verwendet werden, um Fahrgasträume von schädlichen Stoffen weitgehend frei zu halten.

Vor diesem Hintergrund ist aus der DE 101 04 882 B4 ein Aktivkohleformkörper bekannt, welcher eine Wabenstruktur aufweist. Der Aktivkohleformkörper ist durch Extrusion einer Mischung aus Aktivkohle und weiterer Stoffe gefertigt und dient zur Verwendung als Adsorptionsfilter.

Aufgabe derartiger Aktivkohlefilter ist es Schadgase aus einem Luftstrom herauszufiltern.

Ein weiteres Filterelement, welches einen Aktivkohleformkörper mit einer Wabenstruktur aufweist, ist aus der DE 101 50 062 B4 bekannt.

Die EP 2 946 827 A1 offenbart einen weiteren Aktivkohleformkörper mit Kanälen.

Aus der EP 0 393 729 A2 wird ein Filter für die Reinigung von Abgas aus einem Verbrennungsmotor beschrieben. Der Filter besitzt eine Mehrzahl von wabenförmigen Zellen, die aus einem porösen und elektrisch leitfähigen Material bestehen. Die jeweiligen Zellen sind untereinander isoliert. Eine jeweilige Zelle kann mit Strom beaufschlagt werden, um den Filter aufzuheizen und die Filtrationsleistung zu beeinflussen.

Nachteilig an den aus dem Stand der Technik bekannten Filtern ist, dass sich elektrische Ladung ansammeln und es zu unerwünschter Funkenentladung kommen kann. Besonders in explosiven Umgebungen wie z.B. bei Anlagen, welche in der Öl- und Gasindustrie zum Einsatz gelangen, stellt dies ein Sicherheitsrisiko dar.

### Aufgabenstellung

Aufgabe der vorliegenden Erfindung ist es ein Filterelement zu schaffen, welches Schadgase adsorbieren kann und auch in explosiven Umgebungen einsetzbar ist.

### Technische Lösung

Gelöst wird diese Aufgabe durch ein Filterelement mit den Merkmalen von Anspruch 1.

Das erfindungsgemäße Filterelement dient der Adsorption von Schadgasen aus einem Fluidstrom, insbesondere einem Luftstrom und besitzt einen Rahmen sowie eine Mehrzahl von beabstandet nebeneinander in den Rahmen angeordneter Filterkörper. Ein jeweiliger Filterkörper weist dabei eine Vielzahl von durchströmbaren Öffnungen auf. Die Anordnung der Öffnungen in dem Filterkörper kann wabenförmig ausgebildet sein, so dass in diesem Fall auch von einem Wabenkörper gesprochen werden kann.

Die Öffnungen sind dabei als Kanäle ausgebildet welche den Wabenkörper durchziehen. Durch die Kanäle kann so zu filternde Luft hindurchströmen, ohne dass zwischen Anströmseite und Abströmseite des Filterkörpers ein wesentlicher Druckverlust auftritt.

Erfindungsgemäß ist mindestens einer der Filterkörper mit dem Rahmen über ein elektrisch ableitfähiges Verbindungselement verbunden. Somit können Ladungen einfach nach Außen abgeleitet und beispielsweise vom Filterelement auf eine geerdete Filteraufnahme übertragen werden. Besonders bevorzugt ist, wenn das Verbindungselement als Metallfeder ausgebildet ist, zum Beispiel aus Edelstahl, Silber oder Kupfer. Der Rahmen kann ebenfalls insbesondere als Metallrahmen ausgeführt sein, beispielsweise aus Edelstahl oder Kupfer. Alternativ kann das Verbindungselement wie die obenstehend beschriebenen Kontaktelemente ausgeführt sein.

Erfindungsgemäß ist ein jeweiliger Filterkörper mit mindestens einem weiteren der Filterkörper über je ein elektrisch ableitfähiges Kontaktelement verbunden und elektrische Ladungen werden abgeleitet. Ein jeweiliger Filterkörper kann somit auch mit mehreren, insbesondere mit allen seiner angrenzenden Filterkörper über je ein elektrisch ableitfähiges Kontaktelement verbunden sein. Erfindungsgemäß ist das Kontaktelement dabei aus einem Material, welches elektrisch ableitfähig ist. Es muss damit keine gute Leitfähigkeit wie bei Metallen vorliegen, sondern es genügt auch eine eher schlechte Leitfähigkeit, wie sie bei einer Vielzahl von Kunststoffen und Klebstoffen erreichbar ist.

Vorteilhaft an einem derartigen Filterelement ist, dass die Ableitfähigkeit nicht nur innerhalb eines jeweiligen Filterkörpers, sondern auch zwischen den jeweiligen Filterkörpern hergestellt wird. Durch die ableitfähige Verbindung der Filterkörper miteinander können im Filterkörper auftretende Ladungen nach Außen abfließen und sammeln sich nicht an. Durch das Verhindern eines Ansammelns von Ladung kann die Bildung von Funken in dem Filterelement vermieden werden.

In einer besonders vorteilhaften und daher bevorzugten Weiterbildung des erfindungsgemäßen Filterelements sind die Filterkörper matrixförmig angeordnet, d. h. in einer Zeilen und Spalten aufweisenden regelmäßigen Gitterstruktur. Dank der regelmäßigen Gitterstruktur können die Filterkörper dicht gepackt werden und können die elektrisch ableitfähigen Kontaktelemente einfach eingesetzt werden. In einer alternativen Ausgestaltung sind die Filterkörper in einem Verbund mit unregelmäßiger Anordnung angeordnet.

Weiterhin bevorzugt ist, wenn die Filterkörper zumindest teilweise aus Aktivkohle bestehen. Durch die Verwendung von Aktivkohle kann eine effektive Adsorption von Schadgasen erreicht werden.

Die Filterkörper könnten bevorzugt aus Aktivkohle gefertigt sein oder Aktivkohle aufweisen.

Aktivkohle kann in Form einer Paste oder als Teil einer Paste leicht zu einem Wabenkörper extrudiert werden. Daher wird Aktivkohle als vorteilhaftes Material angesehen.

Der Anteil an Aktivkohle am Wabenkörper könnte zwischen 30 und 80 Gewichtsprozent betragen. Hierdurch weist der Wabenkörper eine ausreichende Menge an Aktivkohle auf und ist dennoch mechanisch stabil.

Die Wabenkörper könnten mit einer Imprägnierung versehen sein. Durch Vorsehen einer an den Einsatzbereich des Filterelements angepassten Imprägnierung kann die Adsorptionsleistung weiter verbessert werden.

Ein vorteilhafter Wabenkörper umfasst mindestens 55 Gew.% Aktivkohle. Des Weiteren kann der Wabenfilter Begleitstoffe enthalten. Vorteilhafte Begleitstoffe sind beispielsweise Glaskohlenstoff und/oder Alumosilikat. Die Zelldichte des Wabenkörpers, also die Anzahl der Kanäle je Flächeneinheit, beträgt vorzugsweise zwischen 10 und 120 Zellen/cm², besonders bevorzugt zwischen 30 und 95 Zellen/cm².

Die Wandstärke der Kanalwände könnte zwischen 150 Mikrometer und 450 Mikrometer betragen. Hierdurch wird ein Wabenkörper mit einer sehr großen Anzahl an Kanälen geschaffen.

Vorteilhafter Weise könnte die Anzahl der Kanäle im Wabenkörper zwischen 30 und 100 Kanälen pro Quadratzentimeter betragen. Diese Kanaldichte hat sich als besonders vorteilhaft erwiesen, um einen geringen Druckverlust bei hoher Adsorptionsdynamik sicher zu stellen.

Das elektrisch ableitfähige Kontaktelement kann gemäß unterschiedlicher Alternativen ausgestaltet sein. In einer ersten Ausgestaltung ist das Kontaktelement als elektrisch leitfähiger Lack ausgebildet. Bei dem Lack kann es sich um einen Leitlack handeln, welcher Anteile von Graphit, Silber oder Kupfer aufweist. In einer alternativen Ausführungsvariante kann das elektrisch ableitfähige Kontaktelement als Klebstoff ausgebildet sein, zum Beispiel als leitfähiger Klebstoff, welcher Füllstoffe, wie zum Beispiel Graphit, Silber, Kupfer enthält. Der Lack oder der Klebstoff können einfach appliziert werden durch Aussprühen, Aufdrucken oder Auftropfen.

In einer alternativen Ausführungsvariante ist das Kontaktelement als Metalldraht oder als Metallklammer ausgebildet, insbesondere aus Kupfer, Silber oder Aluminium. Die Metalldrähte oder Metallklammern können mit den Filterkörpern durch Verkleben, Verschweißen oder Einstecken bzw. Aufstecken verbunden werden.

In einer alternativen Ausführungsvariante kann als Kontaktelement ein elektrisch leitfähiges Band, insbesondere ein Klebeband verwendet werden. Das Band kann dabei als Metallband ausgestaltet sein, zum Beispiel aus Kupfer, Silber oder Aluminium oder zumindest diese Bestandteile als eine Schicht aufweisen. Ein Metallklebeband kann einfach auf die Filterkörper aufgeklebt werden, so dass diese über das Metallklebeband schnell miteinander verbunden werden.

In einer alternativen Ausführungsvariante wird das Kontaktelement als elektrisch leitfähige Kunststoffmatrix ausgebildet, wobei die Kunststoffmatrix Ausnehmungen besitzt, zum Aufnehmen der Filterkörper. Dies erfolgt derart, dass die aufgenommenen Filterkörper die Kunststoffmatrix berühren. Die Kunststoffmatrix kann aus leitfähigem Schaumstoff sein, zum Beispiel elektrisch leitfähiger PUR-Schaum.

Ein wie obenstehend ausgeführtes Filterelement kann in vorteilhafter Weise in explosiver Umgebung in einen Filter eingesetzt werden, zum Beispiel in Flüssigkeitstanks oder allgemein in der Öl- und Gasindustrie. In den dort vorliegenden explosionsfähigen Atmosphären ist es besonders wichtig, dass sich keine Ladungen ansammeln, welche zu einer Funkenbildung und damit zu einer Entzündung und folglich Explosion führen könnten.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1a: eine erste Ausführung eines Filterelements
- Fig. 1b: einen Ausschnitt aus einer Draufsicht auf das Filterelement von Fig. 1a
- Fig. 2a: eine zweite Ausführung eines Filterelements
- Fig. 2b: einen Ausschnitt aus einer Draufsicht auf das Filterelement von Fig. 2a
- Fig. 3: eine dritte Ausführung eines Filterelements
- Fig. 4: eine vierte Ausführung eines Filterelements
- Fig. 5: eine fünfte Ausführung eines Filterelements
- Fig. 6: eine Detailansicht eines Filterkörpers

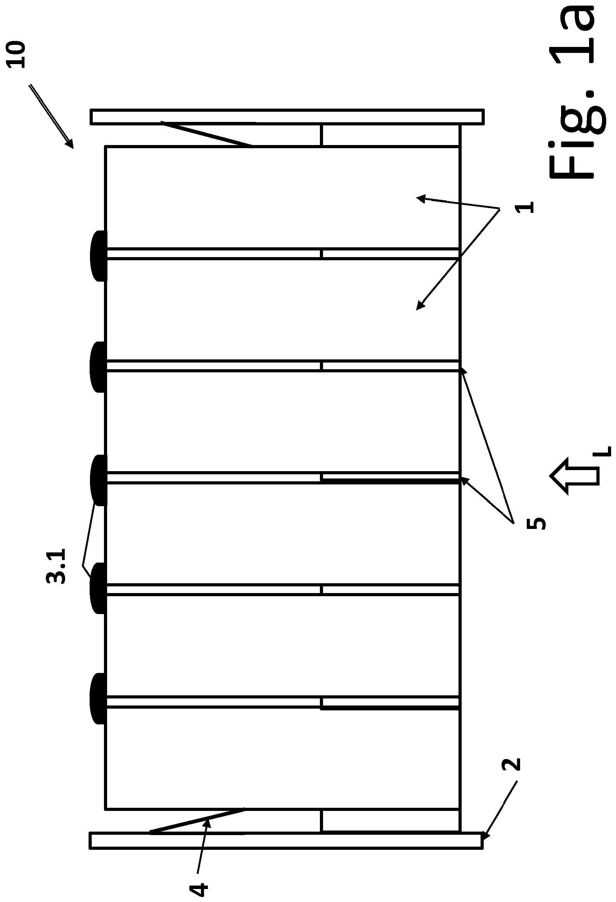

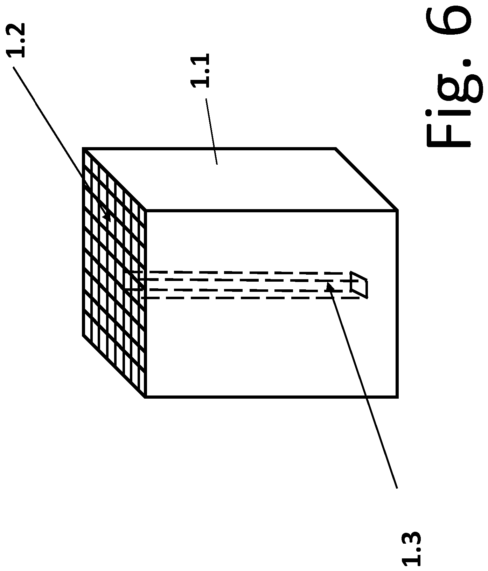

In Figur 1a ist eine erste Ausführungsvariante eines erfindungsgemäßen Filterelements 10 dargestellt. Das Filterelement 10 besitzt einen Rahmen 2, in welchem eine Mehrzahl von Filterkörpern 1 angeordnet ist. Die Filterkörper 1 können jeweils einen Aufbau haben, wie er in Figur 6 skizziert ist: Der Filterkörper 1 ist dabei als Wabenkörper 1.1 ausgeführt, welcher eine Vielzahl von nebeneinanderliegenden Öffnungen 1.2 besitzt. Eine jeweilige Öffnung 1.2 stellt das Ende eines an beiden Seiten offenen Kanals 1.3 dar. Die Kanäle 1.3 sind durch Zwischenwände voneinander getrennt. Wie im Beispiel von Figur 6 kann eine jeweilige Öffnung 1.2 eine quadratische Grundfläche aufweisen. Alternativ denkbar sind beispielsweise auch rechteckige oder sechseckige Öffnungen, welche an Bienenwaben erinnern.

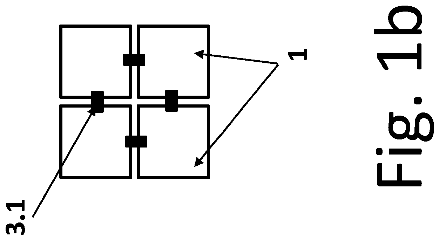

Die Filterkörper 1 sind durch einen Klebstoff 5 miteinander verbunden, so dass diese stabil im Rahmen 2 aufgenommen sind. Der Klebstoff 5 ist dabei jedoch nicht ableitfähig. Als ableitfähige Kontaktelement 3 ist ein ableitfähiger Lack 3.1 vorgesehen, welcher jeweils nebeneinanderliegende Filterkörper 1 miteinander verbindet. Ein Ausschnitt einer Draufsicht auf das Filterelement 10 ist in Figur 1b dargestellt. Bildet sich in einem Filterkörper 1 eine Ladung, so kann diese über das Kontaktelement 3, hier also den Lack 3.1, auf die angrenzenden Filterkörper 1 abfließen. Mindestens einer der außenliegenden Filterkörper 1 ist über ein Verbindungselement 4, welches ebenfalls elektrisch ableitfähig ist, mit dem Rahmen 2 verbunden. So kann eine elektrische Ladung über den Rahmen 2 abfließen.

Das Filterelement 10 dient zur Adsorption von Schadgasen aus einem Fluidstrom L, welcher durch einen Pfeil angedeutet ist. Der Fluidstrom L kann die Filterkörper 1, genauer die Kanäle 1.3, durchströmen und erfährt dabei eine Reinigung.

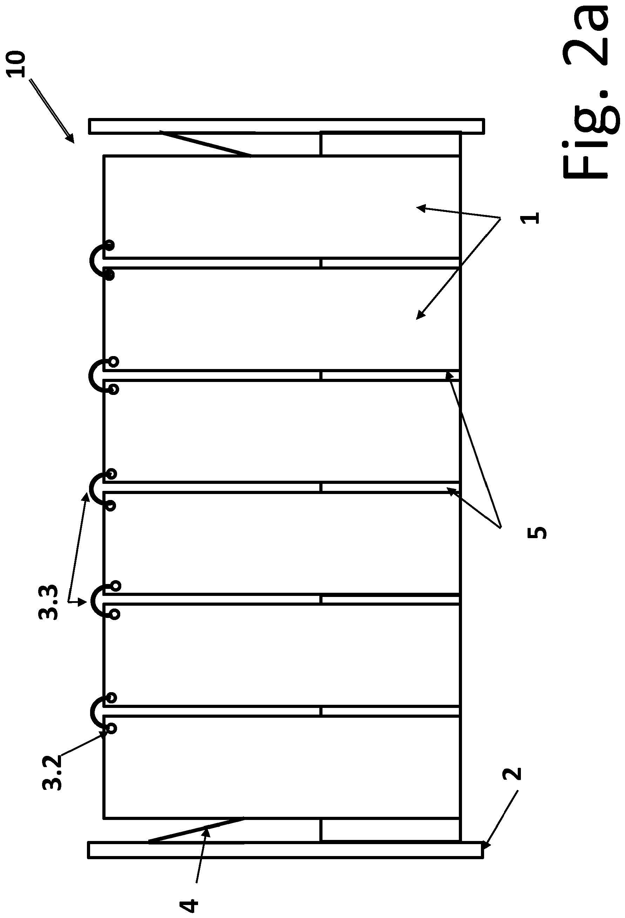

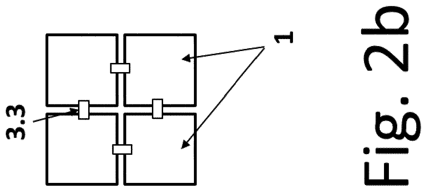

In Figur 2a ist eine alternative Ausgestaltung eines Filterelements 10 dargestellt. Das Filterelement 10 weist dabei den gleichen Aufbau auf, wie das Filterelement 10 aus Figur 1a. Nur die Kontaktelemente 3 wurden anders ausgeführt: Als Kontaktelemente 3 wurden Metalldrähte oder Metallklammern 3.3 eingesetzt, welche jeweils mit einem leitfähigen Klebstoffpunkt 3.2 mit den Filterkörpern 1 verbunden sind.

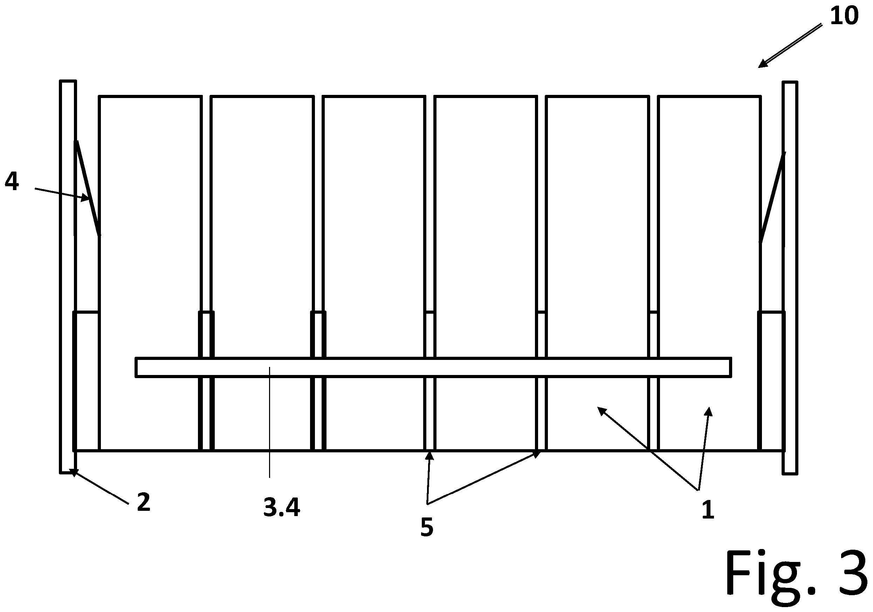

In der alternativen Ausführungsvariante eines Filterelements 10 wird gemäß der Darstellung von Figur 3 als Kontaktelement 3 ein leitfähiges Band 3.4 verwendet. Das leitfähige Band 3.4 verbindet die Filterkörper 1 miteinander. In einer nicht gezeigten alternativen Ausführungsform kann das leitfähige Band 3.4 nicht nur die Filterkörper 1 miteinander, sondern auch die Filterkörper 1 mit dem Rahmen 2 verbinden. Als Verbindungselemente 4 zwischen Rahmen 2 und Filterkörpern 1 wird hier jedoch eine Metallfeder 4 verwendet.

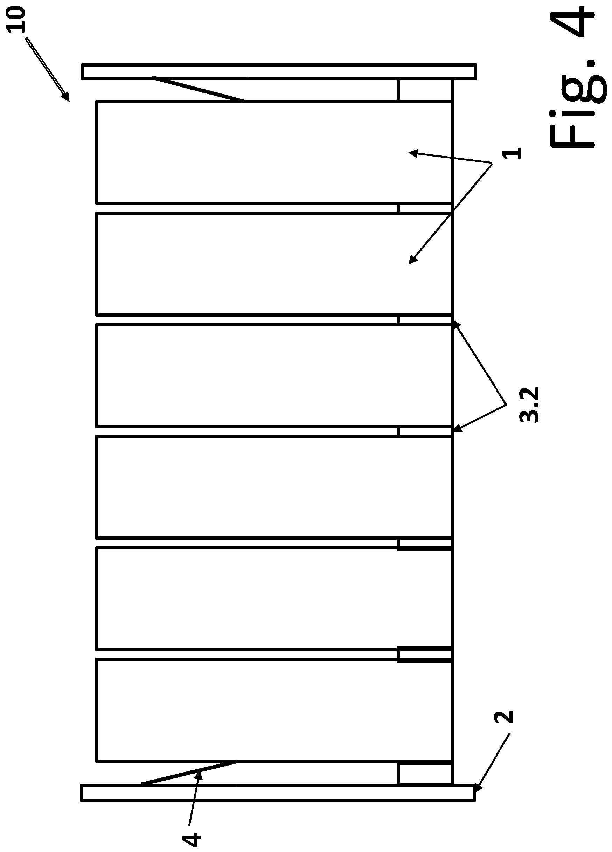

In der in Figur 4 dargestellten Variante des Filterelements 10 wurde zum Verkleben der Filterelemente 1 in dem Rahmen 2 ein leitfähiger Klebstoff 3.2 verwendet. Der leitfähige Klebstoff 3.2 übernimmt somit zwei Aufgaben: Er garantiert zum einen, eine stabile Positionierung der Filterkörper in dem Rahmen 2, als auch ein Ableiten von elektrischen Ladungen zwischen den Filterkörpern 1. Werden die Filterkörper 1 direkt in den Rahmen 2 mittels des leitfähigen Klebstoffs 3.2 eingeklebt, so kann auf das zusätzliche Verbindungselement 4 verzichtet werden. Von den jeweils äußeren Filterkörpern 1 kann elektrische Ladung direkt über den leitfähigen Klebstoff 3.2 auf den Rahmen 2 abfließen.

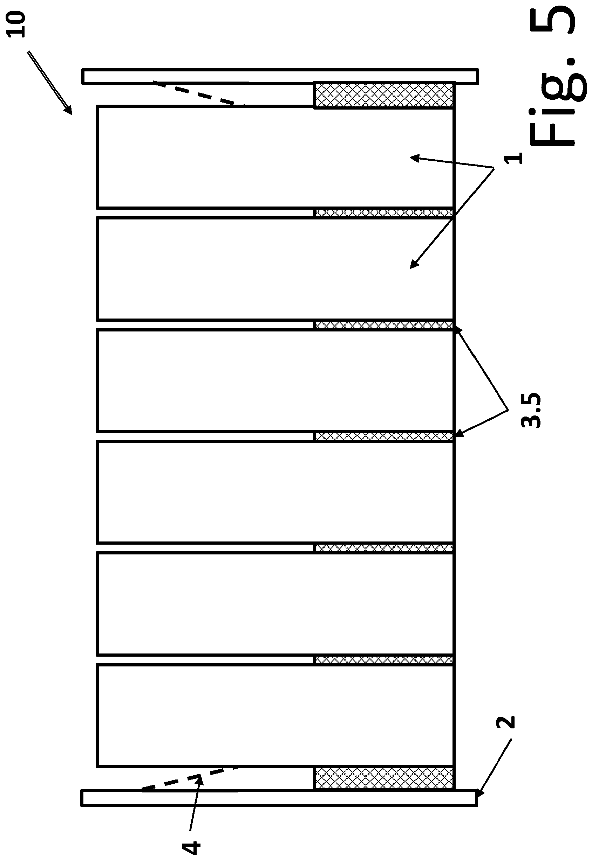

Auch in der Variante des Filterelements 10 von Figur 5 ist das Verbindungselement 4 fakultativ und ist daher hier gestrichelt dargestellt. In dieser Variante wurden die Filterkörper 1 in eine geschäumte Kunststoffmatrix 3.5 eingesetzt, wobei die Kunststoffmatrix aus einem elektrisch ableitfähigen Schaumstoff besteht. Ladungen können so von den Filterkörpern über die Kunststoffmatrix 3.5 auf den Rahmen 2 abgeleitet werden.

### Bezugszeichenliste

- 1: Filterkörper
- 1.1: Wabenkörper
- 1.2: Öffnung
- 1.2: Kanal
- 2: Rahmen
- 3: Kontaktelement
- 3.1: Lack
- 3.2: leitfähiger Klebstoff
- 3.3: Metalldraht oder Metallklammer
- 3.4: leitfähiges Band
- 3.5: Kunststoffmatrix (geschäumt)
- 4: Verbindungselement
- 5: Klebstoff

- 10: Filterelement

- L: Luftstrom

## Patentansprüche

1. Filterelement (10) zur Adsorption von Schadgasen aus einem Fluidstrom (L) aufweisend einen Rahmen (2) und eine Mehrzahl von beabstandet nebeneinander in dem Rahmen (2) angeordneten Filterkörpern (1), wobei ein jeweiliger Filterkörper (1) eine Vielzahl von Öffnungen (1.2) aufweist, **dadurch gekennzeichnet,**
**dass** ein jeweiliger Filterkörper (1) mit mindestens einem weiteren der Filterkörper (1) über je ein elektrisch ableitfähiges Kontaktelement (3) zum Ableiten elektrischer Ladungen verbunden ist, und
**dass** mindestens einer der Filterkörper (1) mit dem Rahmen (2) über ein elektrisch ableitfähiges Verbindungselement (4) verbunden ist.

2. Filterelement nach Anspruch 1, **dadurch gekennzeichnet, dass** die Filterkörper (1) matrixförmig angeordnet sind, und/oder, dass die Filterkörper (1) als Wabenkörper ausgeführt sind, und/oder, dass die Filterkörper (1) zumindest teilweise aus Aktivkohle bestehen.

3. Filterelement nach einem der vorangehenden Ansprüche, **dadurch gekennzeichnet, dass**
das Kontaktelement (3) als elektrisch leitfähiger Lack (3.1) oder als elektrisch leitfähiger Klebstoff (3.2) ausgebildet ist.

4. Filterelement nach einem der Ansprüche 1 bis 2, **dadurch gekennzeichnet, dass**
das Kontaktelement (3) als Metalldraht oder als Metallklammer (3.3) ausgebildet ist.

5. Filterelement nach einem der Ansprüche 1 bis 2, **dadurch gekennzeichnet, dass**
das Kontaktelement (3) als elektrisch leitfähiges Band (3.4) ausgebildet ist.

6. Filterelement nach Anspruch 1 oder 2, **dadurch gekennzeichnet, dass** das Kontaktelement (3) als elektrisch leitfähige Kunststoffmatrix (3.5) ausgebildet ist.

7. Filterelement nach einem der vorangehenden Ansprüche, **dadurch gekennzeichnet, dass**
das Verbindungselement (4) als Metallfeder und der Rahmen (2) als Metallrahmen ausgebildet ist.

8. Filterelement nach einem der vorangehenden Ansprüche, **dadurch gekennzeichnet, dass**
ein jeweiliger Filterkörper (1) mit jedem seiner angrenzenden Filterkörper (1) über je ein elektrisch ableitfähiges Kontaktelement (3) verbunden ist.

9. Filter zum Einsatz in explosiver Umgebung aufweisend zumindest ein Filterelement (10) nach einem der vorangehenden Ansprüche.

## Claims

1. Filter element (10) for the adsorption of pollutant gases from a fluid stream (L), having a frame (2) and a plurality of filter bodies (1) arranged spaced apart and next to one another in the frame (2), wherein each filter body (1) has a large number of openings (1.2), **characterized in that** each filter body (1) is connected to at least one further filter body (1) via an electrically dissipative contact element (3) for dissipating electrical charges in each case, and **in that** at least one of the filter bodies (1) is connected to the frame (2) via an electrically dissipative connecting element (4).

2. Filter element according to Claim 1, **characterized in that** the filter bodies (1) are arranged in the form of a matrix, and/or **in that** the filter bodies (1) are designed as honeycomb bodies, and/or **in that** the filter bodies (1) at least partially comprise activated carbon.

3. Filter element according to one of the preceding claims, **characterized in that** the contact element (3) is designed as an electrically conductive surface coating (3.1) or as an electrically conductive adhesive (3.2).

4. Filter element according to one of Claims 1 or 2, **characterized in that** the contact element (3) is designed as a metal wire or as a metal clip (3.3).

5. Filter element according to one of Claims 1 or 2, **characterized in that** the contact element (3) is designed as an electrically conductive tape (3.4).

6. Filter element according to Claim 1 or 2, **characterized in that** the contact element (3) is designed as an electrically conductive plastics matrix (3.5).

7. Filter element according to one of the preceding claims, **characterized in that** the connecting element (4) is designed as a metal spring and the frame (2) is designed as a metal frame.

8. Filter element according to one of the preceding claims, **characterized in that** each filter body (1) is connected to each of its adjoining filter bodies (1) via an electrically dissipative contact element (3) in each case.

9. Filter for use in an explosive environment, having at least one filter element (10) according to one of the preceding claims.

## Revendications

1. Élément filtrant (10) destiné à adsorber les gaz nocifs d'un flux de fluide (L), ledit élément filtrant comportant un cadre (2) et une pluralité de corps filtrants (1) disposés dans le cadre (2) à distance les uns à côté des autres, un corps filtrant respectif (1) comportant une pluralité d'ouvertures (1.2), **caractérisé en ce que**
un corps filtrant respectif (1) est relié à au moins un autre des corps filtrants (1) par le biais d'un élément de contact électriquement conducteur (3) pour évacuer des charges électriques, et
l'un au moins des corps filtrants (1) est relié au cadre (2) par le biais d'un élément de liaison électriquement conducteur (4).

2. Élément filtrant selon la revendication 1, **caractérisé en ce que** les corps filtrants (1) sont disposés sous la forme d'une matrice, et/ou **en ce que** les corps filtrants (1) sont réalisés sous la forme de corps en nid d'abeille, et/ou **en ce que** les corps filtrants (1) sont au moins partiellement en charbon actif.

3. Élément filtrant selon l'une des revendications précédentes, **caractérisé en ce que**
l'élément de contact (3) est conçu sous la forme d'une peinture électriquement conductrice (3.1) ou d'une colle électriquement conductrice (3.2).

4. Élément filtrant selon l'une des revendications 1 à 2, **caractérisé en ce que**
l'élément de contact (3) est conçu sous la forme d'un fil métallique ou d'une agrafe métallique (3.3).

5. Élément filtrant selon l'une des revendications 1 à 2, **caractérisé en ce que**
l'élément de contact (3) est conçu sous la forme d'une bande électriquement conductrice (3.4).

6. Élément filtrant selon la revendication 1 ou 2, **caractérisé en ce que**
l'élément de contact (3) est conçu sous la forme d'une matrice de matière synthétique électriquement conductrice (3.5).

7. Élément filtrant selon l'une des revendications précédentes, **caractérisé en ce que**
l'élément de liaison (4) est conçu sous la forme d'un ressort métallique et le cadre (2) est conçu sous forme d'un cadre métallique.

8. Élément filtrant selon l'une des revendications précédentes, **caractérisé en ce que**
un corps filtrant respectif (1) est relié à chacun de ses corps filtrants adjacents (1) par le biais d'un élément de contact électriquement conducteur (3).

9. Filtre destiné à être utilisé en milieu explosif et comportant au moins un élément filtrant (10) selon l'une des revendications précédentes.
